# EUROPÄISCHE PATENTSCHRIFT

(11) **EP 2 975 760 B1**
(45) Veröffentlichungstag und Bekanntmachung des Hinweises auf die Patenterteilung: **30.10.2019**
(21) Anmeldenummer: 14177716.9
(22) Anmeldetag: 18.07.2014
(51) Int. Cl.: H02S 20/25

(54) **Solardachziegel**
Solar roofing tile
Tuile solaire

(43) Veröffentlichungstag der Anmeldung: 20.01.2016
(73) Patentinhaber: ERLUS AKTIENGESELLSCHAFT, 84088 Neufahrn (DE)
(72) Erfinder: Hacker, Alois, 84061 Ergoldsbach (DE); Ackerhans, Carsten, 84066 Mallersdorf-Pfaffenberg (DE); Stoll, Alexander, 85354 Freising (DE)
(74) Vertreter: Louis Pöhlau Lohrentz

(56) Entgegenhaltungen:
- WO-A2-2009/071956
- DE-A1- 10 358 851
- FR-A1- 2 914 785
- US-A1- 2010 223 864
- US-A1- 2012 006 397

## Beschreibung

Die Erfindung betrifft einen Solardachziegel nach den Merkmalen des Oberbegriffs des Anspruchs 1.

Die DE 103 58 851 A1 beschreibt einen Photovoltaikdachziegel mit einem Grundkörper, auf dessen Oberfläche eine Glasurschicht aufgebracht ist, die das Substrat eines photovoltaischen Elements ist. Es sind ein fußseitiges und ein kopfseitiges Kontaktelement vorgesehen, die aus Endabschnitten von Leiterbahnen ausgebildet sind. Bei in der Dachabdeckung verlegten Photovoltaikziegeln kommt das kopfseitige Kontaktelement eines unteren Photovoltaikziegels mit dem fußseitigen Kontaktelement des in der nächsthöheren Ziegelreihe angrenzenden Nachbarziegels zur Anlage, so dass die zugehörigen Leiterbahnen elektrisch miteinander verbunden sind. Die gegenseitige Kontaktierung benachbarter Ziegel kann auch an den Seitenfalzen erfolgen.

Die EP 2 398 059 A1 beschreibt einen Dachziegel mit einer Solarzellenfolie. Zur Kontaktierung sind winkelförmige Kontaktelemente mit Schneidelementen vorgesehen, die bei der Montage des Dachziegels in einer Dacheindeckung eine Isolierschicht eines an einer Dachlatte angeordneten zweipoligen Kontaktelements durchgreifen. Die Schneidelemente sind gegenüber den Kontaktelementen elektrisch isoliert und jeweils mit einer Ableitung der Solarzellenfolie elektrisch verbunden.

Die Aufgabe der Erfindung ist, einen Solardachziegel der genannten Art, der eine verbesserte elektrische Kontaktierung aufweist, sowie eine verbesserte Dachkonstruktion mit Solardachziegeln anzugeben.

Die Aufgabe der Erfindung wird mit einem Solardachziegel mit den Merkmalen des Anspruchs 1 gelöst.

Der erfindungsgemäße Solardachziegel weist einen keramischen Grundkörper auf, auf dessen Außenseite eine photoaktive Zelle zur elektrischen Stromgewinnung angeordnet ist. Weiter mit einer Anschlussvorrichtung, die ein mit der photoaktiven Zelle elektrisch leitend verbundenes Kontaktelement aufweist, welches mit einer Anschlussvorrichtung eines zweiten Solardachziegels und/oder mit einem elektrischen Leiter und/oder mit einer Stromschiene verbindbar ist. Wobei das elektrische Kontaktelement so ausgebildet ist, dass es sich beim Auflegen des Solardachziegels auf eine Unterkonstruktion ein elektrisch leitender Abschnitt des elektrischen Kontaktelements automatisch mit einer elektrisch leitenden Stromschiene und/oder mit einem elektrisch leitenden Teil einer Anschlussvorrichtung eines zweiten Solardachziegels und/oder einem an der Unterkonstruktion angeordneten elektrischen Leiter verbindet, wobei vorgesehen ist, dass die Anschlussvorrichtung einen elektrischen Leiter aufweist, der zumindest abschnittsweise zum Kontaktieren der photoaktiven Zelle als eine optisch transparente und elektrisch leitfähige Beschichtung ausgebildet ist.

Über die zumindest abschnittsweise optisch transparente Beschichtung des elektrischen Leiters wird insbesondere im Bereich der photoaktiven Zelle eine besonders effiziente Art der Kontaktierung erzielt. Die optisch transparente Beschichtung des elektrischen Leiters kann im Bereich der photoaktiven Zelle angeordnet sein oder im Bereich der photoaktiven Zelle verlaufen, um diese elektrisch zu kontaktieren. Die optisch transparente Beschichtung kann einen Bereich der photoaktiven Zelle teilweise überdecken. So kann eine flächige Kontaktierung der photoaktiven Zelle erzielt werden. Die flächige Kontaktierung ist für die Stromableitung besonders vorteilhaft, da nur eine geringe Strombelastung pro Flächeneinheit auftritt. Zudem wird verhindert, dass der für die Stromgewinnung wirksame photoaktive Bereich der Zelle durch die Kontaktierung eingeschränkt wird bzw. die wirksame photoaktive Fläche der Zelle verkleinert wird.

Eine mechanisch besonders widerstandsfähige und abriebfeste Beschichtung, die zugleich eine hohe optische Transparenz besitzt, kann erzielt werden, wenn die optisch transparente und elektrisch leitfähige Beschichtung ein Metalloxid, insbesondere ein Zinnoxid enthält. Das Zinnoxid kann zudem mit weiteren Metallen, beispielsweise mit Wolfram oder Indium oder Antimon dotiert werden um die mechanische Widerstandsfähigkeit der Beschichtung weiter zu verbessern. Auch eine Dotierung des Zinnoxids mit Fluor ist denkbar.

Es kann vorgesehen sein, dass die Verbindung des elektrischen Kontaktelements des Solardachziegels mit einer Stromschiene und/oder einer Anschlussvorrichtung eines zweiten Solardachziegels und/oder einem elektrischen Leiter kraftschlüssig oder formschlüssig erfolgt. Dadurch wird eine elektrische Verbindung erreicht, die mechanisch stabil ist und gleichzeitig eine hohe Kontaktsicherheit aufweist.

Die photoaktive Zelle kann beispielsweise als Solarzelle, insbesondere als Siliziumzelle oder als Dünnschichtzelle oder als organische Solarzelle ausgebildet sein. Für eine Ausführung mit niedrigen Herstellkosten kann die photoaktive Zelle als Grätzelzelle oder als Farbstoffzelle ausgebildet sein.

In einer Ausführung kann vorgesehen sein, dass das elektrische Kontaktelement an der Innenseite des keramischen Grundkörpers angeordnet ist und vorzugsweise in dem keramischen Grundkörper gehaltert ist.

Das elektrische Kontaktelement kann einen eine Kontaktfeder aufweisenden Stift aufweisen, der beim Auflegen des Solardachziegels auf eine Unterkonstruktion in die Stromschiene oder eine Anschlussvorrichtung eines zweiten Solarziegels formschlüssig eingreift.

In einer vorteilhaften Ausbildung kann vorgesehen sein, dass das elektrische Kontaktelement als Schneidklemmelement ausgebildet ist, welches zwei Schneidflanken zum Kontaktieren eines elektrischen Leiters aufweist.

Das Schneidklemmelement kann eine Schneidgabel aufweisen, wobei die zwei Schneidflanken einander gegenüberliegend angeordnet sind und einen Schneidklemmspalt begrenzen.

Es kann auch vorgesehen sein, dass das Schneidklemmelement eine Schneidspitze aufweist, wobei die zwei Schneidflanken einander gegenüberliegend angeordnet sind und die Schneidspitze bilden, indem sie ausgehend von einer gemeinsamen Spitze zur Basis des Schneidklemmelementes hin mit größerem Abstand zueinander verlaufen.

Die beiden Schneidflanken der Schneidspitze können voneinander elektrisch isoliert sein.

Es kann vorgesehen sein, dass das Schneidklemmelement während des Kontaktierens eine Isolierung durchtrennt.

Weiter kann vorgesehen sein, dass die Anschlussvorrichtung ein elektrisches Anschlusselement aufweist, welches an der Außenseite des keramischen Grundkörpers angeordnet und mit dem elektrischen Kontaktelement eines zweiten Solardachziegels verbindbar ist. Auf diese Weise können die photoaktiven Zellen benachbarter Solardachziegel in einer Reihenschaltung und/oder in einer Parallelschaltung elektrisch miteinander verbunden sein.

Der keramische Grundkörper kann an seiner Innenseite eine Nase zum Einhängen an einen Dachstuhl oder eine Dachlatte aufweisen und es kann ein elektrisches Kontaktelement der Anschlussvorrichtung im Bereich dieser Nase angeordnet sein.

Die photoaktive Zelle kann beispielsweise als Farbstoffzelle ausgebildet sein und als eine photoaktive Schicht direkt auf den keramischen Grundkörper aufgebracht oder mit dem keramischen Grundkörper flächig verbunden sein. So ergibt sich eine besonders kostengünstige Art der Herstellung.

Vorzugsweise kann die optisch transparente und elektrisch leitfähige Beschichtung Wolfram-dotiertes Zinnoxid, vorzugsweise kristallines Wolfram-dotiertes Zinnoxid enthalten. Dadurch kann bei geringen Herstellungskosten eine mechanisch widerstandsfähige Beschichtung erzielt werden, die dennoch eine hohe elektrische Leitfähigkeit und eine gute optische Transparenz aufweist.

Es kann vorgesehen sein, dass die Anschlussvorrichtung die optisch transparente und elektrisch leitfähige Beschichtung zur elektrischen Kontaktierung der photoaktiven Zelle und das elektrische Kontaktelement zur elektrischen Kontaktierung einer Stromschiene und/oder einer Anschlussvorrichtung eines zweiten Solardachziegels und/oder einem elektrischen Leiter einer Unterkonstruktion umfasst. Zudem kann die Anschlussvorrichtung einen Abschnitt mit elektrischen Leitern, vorzugsweise metallischen Leitern umfassen, um die optisch transparente und elektrisch leitfähige Beschichtung mit dem elektrischen Kontaktelement zu verbinden. Es ist vorgesehen, dass die elektrischen Leiter zumindest abschnittsweise innerhalb des keramischen Grundkörpers verlaufen um eine die eine elektrische Verbindung zwischen der optisch transparenten und elektrisch leitfähigen Beschichtung einerseits und der dem elektrischen Kontaktelement andererseits herstellen.

Es kann vorgesehen sein, dass die elektrischen Leiter bei der Herstellung des Dachziegels in die grüne Keramik eingelegt oder eingepresst werden. Bei dem Berennvorgang des Solardachziegels verbinden sich die elektrischen Leiter mit dem keramischen Grundkörper.

Auf die Außenseite des keramischen Grundkörpers kann eine Beschichtung oder Glasur aufgebracht sein, welche die photoaktive Schicht bzw. die photoaktive Zelle komplett abdeckt.

Es kann vorgesehen sein, dass der keramische Grundkörper im Bereich einer Anschlussvorrichtung oder eines elektrischen Kontaktelements eine Tropfnase zum Abführen von Wasser aufweist.

Gemäß einer bevorzugten Ausführungsform der Erfindung weist der Solardachziegel eine photokatalytisch aktive Oberflächenbeschichtung auf. Die photokatalytisch aktive Oberflächenbeschichtung kann dabei direkt auf der Photozelle, beispielsweise Grätzelzelle oder Farbstoffzelle, angeordnet oder aufgebracht sein. Gemäß einer weiteren Ausführungsform der Erfindung kann die photokatalytisch aktive Oberflächenbeschichtung auch über oder auf einer auf der Außenseite des keramischen Grundkörpers aufgebrachten Beschichtung oder Glasur angeordnet oder aufgebracht sein. Mithin kann auf der Photozelle beispielsweise zunächst eine Glasur oder erste Beschichtung und sodann eine photokatalytisch aktive Beschichtung angeordnet oder aufgebracht sein.

Die photokatalytisch aktive Oberflächenbeschichtung enthält vorzugsweise photokatalytisch aktive, oxidkeramische Materialien, die vorzugsweise aus der Gruppe, die aus TiO₂, Al₂O₃, SiO₂, Ce₂O₃ und Mischungen davon besteht, ausgewählt wird.

Vorzugsweise umfasst die photokatalytisch aktive Oberflächenbeschichtung Titanoxid, weiter vorzugsweise Anatas.

Die photokatalytisch aktive Oberflächenbeschichtung ist vorzugsweise eine für sichtbares Licht transparente Beschichtung. Die Photokatalyse wird durch das im Sonnenlicht vorhandene UV-Licht induziert. Im Ergebnis werden auf dem Solarziegel vorhandene organische Materialien zersetzt, beispielsweise durch photokatalytisch erzeugte Sauerstoffradikale und/oder Hydroxylradikale. Die erzeugten Radikalspezies oxidieren beispielsweise sich auf den Solardachziegeln abgelagerte Verschmutzungsstoffe wie beispielsweise Pilzhyphen und/oder abgelagerten Schimmel, Pflanzenwuchs, wie Moos, Algen, etc., und/oder bakterielle Verunreinigungen.

Durch die Anordnung oder Aufbringung einer photokatalytisch aktiven Beschichtung, vorzugsweise als äußerste Beschichtung oder Schicht, auf dem Solardachziegel kann einer Beeinträchtigung der Stromgewinnung durch dauerhafte Ablagerung von Verschmutzungsstoffen auf der Photozelle, vorzugsweise Grätzelzelle oder Farbstoffzelle, entgegengewirkt werden.

Vorzugsweise wird als photokatalytisch aktive Beschichtung eine poröse Schicht aufgebracht, die bevorzugt im Wesentlichen eine oxidkeramische Schicht ist. Vorzugsweise enthält die Schicht Titanoxid, weiter bevorzugt Titandioxid, noch weiter bevorzugt Anatas. Die poröse Schicht kann dabei eine spezifische Oberfläche im Bereich von etwa 25 m²/g bis etwa 200 m²/g, weiter bevorzugt im Bereich von etwa 40 m²/g bis etwa 150 m²/g, noch weiter bevorzugt im Bereich von etwa 50 m²/g bis etwa 100 m²/g, aufweisen.

Die mittlere Schichtdicke der photokatalytisch aktiven Schicht liegt vorzugsweise in einem Bereich von etwa 50 nm bis etwa 50 µm, weiter bevorzugt von etwa 100 nm, bis etwa 1 µm.

Die photokatalytisch aktive Beschichtung oder Schicht umfasst vorzugsweise Mischungen aus Titandioxid und Siliziumdioxid, Titandioxid und Aluminiumoxid, Aluminiumoxid und Siliziumdioxid, oder Titandioxid und Siliciumdioxid und Aluminiumoxid oder besteht aus einer der vorgenannten Mischungen.

Vorzugsweise umfasst die photokatalytisch aktive Beschichtung oder Schicht Mischungen aus Titandioxid und Siliziumdioxid oder besteht daraus. Gemäß einer weiteren bevorzugten Ausführungsform umfasst die photokatalytisch aktive Beschichtung oder Schicht Titandioxid, vorzugsweise in der Anatasmodifikation, das unter Verwendung von kolloidalem Siilziumdioxid an der Oberfläche des Solardachziegels gebunden ist.

Der mit einer photokatalytischen Beschichtung oder Schicht versehene Solardachziegel ist mithin vorzugsweise selbstreinigend. Die unter Einwirkung von Photokatalyse oxidierten Verschmutzungsstoffe weisen ein signifikant verringertes Haftvermögen an dem Solardachziegel auf und werden beispielsweise bei Beregnung oder Berieselung abgewaschen.

Darüber hinaus wirkt die aufgebrachte photokatalytisch aktive Beschichtung oder Schicht auch luftreinigend, indem in der Luft enthaltene Schadgase und /oder Schadstoff, wie beispielsweise NOₓ, SOₓ, NH₃, Formaldehyd, Acetaldehyd, Toluol, etc., abgebaut werden und somit die umgebende Luft gereinigt wird. In diesem Zusammenhang wird auf die EP 2 072 118 A2 verwiesen, Verfahren zur Herstellung von photokatalytisch aktiven Beschichtungen sind aus WO 03/101912 A1, WO 03/101913 A1, oder EP 1 659 106 A2 bekannt, Die Aufgabe der Erfindung wird weiter mit einer Dachkonstruktion mit einem Dachstuhl gelöst, wobei vorgeschlagen wird, dass der Dachstuhl als Unterkonstruktion ausgebildet ist und mehrere erfindungsgemäße Solardachziegel trägt.

Der Dachstuhl kann mehrere Dachlatten aufweist, die parallel und beabstandet zueinander verlaufen, wobei vorgesehen ist,
dass eine oder mehrere Dachlatten als mit der Anschlussvorrichtung verbindbare Stromschiene ausgebildet sind oder eine mit der Anschlussvorrichtung verbindbare Stromschiene aufweisen.

Wenigstens zwei Solardachziegel können elektrisch parallelgeschaltet sein, wobei beide Pole eines Solardachziegels über eine gemeinsame Stromschiene mit zwei getrennten elektrischen Leitern geführt sind.

Es kann vorgesehen sein, dass wenigstens zwei einander zumindest teilweise überlappende Solardachziegel elektrisch in Serie geschaltet sind, indem eine Anschlussvorrichtung des ersten Solardachziegels direkt mit einer Anschlussvorrichtung des zweiten Solardachziegels verbunden ist.

Eine Stromschiene kann zumindest einen in flexibles Isoliermaterial eingebetteten elektrischen Leiter aufweisen, so dass dieser in der Stromschiene quer zu seiner Längserstreckung beweglich gelagert ist.

Die Erfindung wird nun anhand von Ausführungsbeispielen näher erläutert. Es zeigen
- Fig. 1: eine Dachkonstruktion, gebildet aus einem ersten Ausführungsbeispiel des erfindungsgemäßen Solardachziegels in einer schematischen Schnittdarstellung;
- Fig. 2: eine Detailschnittansicht des Solardachziegels in Fig. 1;
- Fig. 3: eine Detailschnittansicht eines zweiten Ausführungsbeispiels eines erfindungsgemäßen Solardachziegels;
- Fig. 4: eine Dachkonstruktion, gebildet aus einem dritten Ausführungsbeispiel des erfindungsgemäßen Solardachziegels in einer schematischen Schnittdarstellung;
- Fig. 5: eine Detailschnittansicht des Solardachziegels in Fig. 4;
- Fig. 6: eine Detailschnittansicht eines vierten Ausführungsbeispiels eines erfindungsgemäßen Solardachziegels;
- Fig. 7: eine Detailschnittansicht eines fünften Ausführungsbeispiels eines erfindungsgemäßen Solardachziegels.

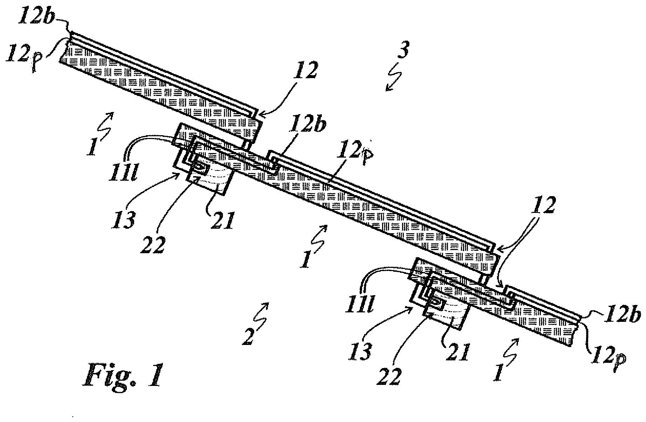

Fig.1 zeigt Solardachziegel 1, die auf einem Dachstuhl 2 verlegt sind. Der Dachstuhl 2 umfasst Dachlatten 21 sowie in den Figuren zugunsten der Übersichtlichkeit nicht dargestellte tragende Dachbalken, an denen die Dachlatten 21 befestigt sind. Die Solardachziegel 1 liegen mit ihrem kopfseitigen Abschnitt auf den Dachlatten 21 und mit ihrem fußseitigen Abschnitt auf der Oberseite des kopfseitigen Abschnitts des traufseitig benachbarten Solardachziegels 1 auf. Der Solardachziegel 1 weist einen keramischen Grundkörper 11 auf, der in dem in Fig. 1 dargestellten

Ausführungsbeispiel nur schematisch dargestellt ist. Die auf dem Dachstuhl 2 angeordneten Solardachziegel bilden eine Dacheindeckung 3.

Auf der Oberseite des Mittenabschnitts und des Fußabschnitts des Solardachziegels 1 ist eine photoaktive Zelle 12 zur elektrischen Stromgewinnung angeordnet. Die photoaktive Zelle 12 ist vorzugsweise als Farbstoffzelle ausgebildet und als eine photoaktive Schicht 12p direkt auf den keramischen Grundkörper 11 aufgebracht. Die als Farbstoffzelle ausgebildete photoaktive Zelle 12 weist vorzugsweise eine optisch transparente und elektrisch leitfähige Beschichtung auf, umfassend ein kristallines wolframdotiertes Zinnoxid.

Auf die Außenseite des keramischen Grundkörpers 11 ist eine Beschichtung oder Glasur 12b aufgebracht, welche die photoaktive Schicht 12p komplett abdeckt.

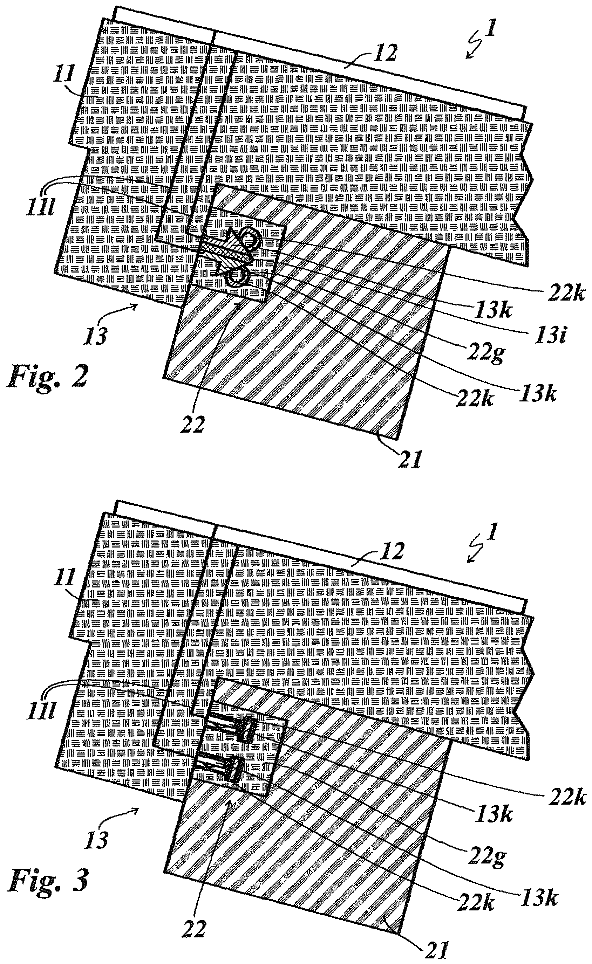

Innerhalb des keramischen Grundkörpers 11 sind elektrische Leiter 11l angeordnet, um eine elektrische Verbindung zwischen der photoaktiven Schicht 11p einerseits und einer an der Unterseite des Grundkörpers 11 im Kopfbereich angeordneten elektrischen Anschlussvorrichtung 13 herzustellen, die zwei voneinander isolierte elektrische Kontaktelemente 13k aufweist (siehe Fig. 2 und 3). In den in Fig. 1 bis 3 dargestellten Ausführungsbeispielen ist die elektrische Anschlussvorrichtung 13 einstückig mit dem keramischen Grundkörper 11 ausgebildet.

Die Fig. 2 und 3 zeigen den Aufbau der elektrischen Anschlussvorrichtung 13 im Einzelnen.

Die in Fig. 1 und 2 dargestellte Anschlussvorrichtung 13 ist als ein Schneidklemmelement ausgebildet, welches zwei Schneidflanken zum Kontaktieren eines elektrischen Leiters aufweist. Die Schneidflanken sind an Kontaktelementen 13k ausgebildet, wobei die Kontaktelemente 13k unter Ausbildung eines Abstandsraumes spiegelbildlich zueinander angeordnet sind und durch ein den Abstandsraum ausfüllendes plattenförmiges Isolierelement 13i elektrisch voneinander isoliert sind. Die Kontaktelemente 13k ragen aus der inneren Stirnseite der Anschlussvorrichtung 13 unter einem Winkel von 90° hervor, die bei auf dem Dachstuhl 2 verlegtem Solardachziegel 1 auf der firstseitigen Stirnseite der Dachlatte 21 aufliegt.

Die Kontaktelemente 13k greifen bei auf dem Dachstuhl 2 verlegtem Solardachziegel 1 in eine Stromschiene 22 ein, die in einer in der firstseitigen Stirnseite der Dachlatte 21 ausgebildeten Nut angeordnet ist. Die Stromschiene 22 umfasst in dem in Fig. 1 und 2 dargestellten Ausführungsbeispiel einen Grundkörper 22g aus einem elektrischen Isoliermaterial und elektrische Kontaktelemente 22k, die in den Grundkörper 22g eingebettet sind. Bei dem elektrischen Isoliermaterial kann es sich beispielsweise um einen elastischen Kunststoff handeln, der durch die elektrischen Kontaktelemente 22k schneidbar ist. Beim Aufsetzen des Solardachziegels 1 auf die Dachlatte 21 durchtrennen die Kontaktelemente 13k der elektrischen Anschlussvorrichtung 13 den Grundkörper 22g und gelangen so in elektrischen Kontakt mit den im Grundkörper 22g eingebetteten elektrischen Kontaktelementen 22k. Weil die Schneidflanken der Kontaktelemente an einem fußseitigen Abschnitt der Kontaktelemente 13k zurückspringen, sind die Kontaktelemente 13k mit der Stromschiene 22 formschlüssig verbunden und gegen Herausziehen aus der Stromschiene 22 gesichert.

In dem in Fig. 3 dargestellten Ausführungsbeispiel sind die Kontaktelemente 13k der an dem Solardachziegel 1 angeordneten elektrischen Anschlussvorrichtung 13 als federnde Steckelemente ausgebildet, und die an der Stromschiene 22 angeordneten Kontaktelemente 22k als Buchsen ausgebildet, in welche die Steckelemente bei auf dem Dachstuhl 2 verlegtem Solardachziegel 1 eingreifen.

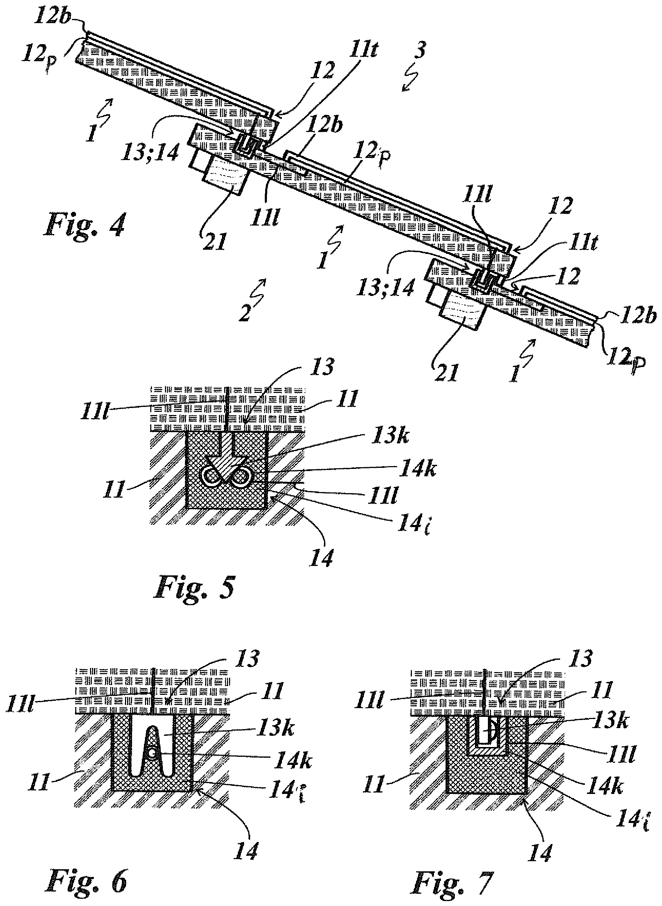

Die Figuren 4 bis 7 zeigen weitere Ausführungsbeispiele, wobei die Fig. 4 analog zu Fig. 1 auf dem Dachstuhl 2 verlegte Solardachziegel 1 zeigt. Der Dachstuhl 2 umfasst tragende Dachbalken und an diesen angeordnete Dachlatten 21. Wie bei den vorstehenden Figuren sind auch bei den Figuren 4 bis 7 die Dachbalken, welche die Dachlatten 21 tragen, zugunsten der Übersichtlichkeit nicht dargestellt. Im Unterschied zu dem in Fig. 1 dargestellten Ausführungsbeispiel ist eine erste elektrische Anschlussvorrichtung 13 an der Unterseite des fußseitigen Abschnitts des Solardachziegels 1 angeordnet und greift in eine an der Oberseite des kopfseitigen Abschnitts eines traufseitig benachbarten Solardachziegels 1 angeordnete zweite Anschlussvorrichtung 14 ein. In den in den Fig. 4 bis 7 dargestellten Ausführungsbeispielen sind die photoaktiven Zellen 12 benachbarter Solardachziegel 1 in einer Reihenschaltung verbunden. Im Unterschied zu den vorstehend beschriebenen Ausführungsbeispielen sind die Anschlussvorrichtungen 13 und 14 einpolig ausgebildet. Der keramische Grundkörper 11 weist im Bereich der Anschlussvorrichtung 13 eine Tropfnase 11t zum Abführen von Wasser auf.

Das in Fig. 5 dargestellte Ausführungsbeispiel ist analog zu dem in Fig. 2 dargestellten Ausführungsbeispiel ausgebildet, mit dem Unterschied, dass die elektrischen Kontaktelemente 13k bzw. 14k jeweils senkrecht zu der Unterseite bzw. zu der Oberseite des Solardachziegels 1 angeordnet sind. Das elektrische Kontaktelement 13k der ersten elektrischen Anschlussvorrichtung 13 ist mit zwei Schneidflanken einstückig ausgebildet. Die zweite Anschlussvorrichtung 14 entspricht im Aufbau der in Fig. 1 und 2 weiter oben beschriebenen Stromschiene 22.

In dem in Fig. 6 dargestellten Ausführungsbeispiel ist das Kontaktelement 13k der ersten elektrischen Anschlussvorrichtung 13 als ein Schneidklemmelement ausgebildet, das eine Schneidgabel aufweist, wobei die zwei Schneidflanken einander gegenüberliegend angeordnet sind und einen Schneidklemmspalt begrenzen. Die zweite elektrische Anschlussvorrichtung 14 weist ein drahtförmiges elektrisches Kontaktelement 14k auf, das bei auf dem Dachstuhl 2 verlegtem Solardachziegel 1 in den Schneidspalt des gabelförmigen Kontaktelements 13k eingreift.

Das in Fig. 7 dargestellte Ausführungsbeispiel ist analog zu dem in Fig. 3 dargestellten Ausführungsbeispiel ausgebildet, wobei das elektrische Kontaktelement 13k der ersten Anschlussvorrichtung 13 als federndes Steckelement ausgebildet ist, und das elektrische Kontaktelement 14k der zweiten elektrischen Anschlussvorrichtung 14 als Buchse ausgebildet ist, in welche das Steckelement bei auf dem Dachstuhl 2 verlegtem Solardachziegel 1 eingreift.

### Bezugszeichenliste

- 1: Solardachziegel
- 2: Dachstuhl
- 3: Dacheindeckung
- 11: keramischer Grundkörper
- 11l: elektrischer Leiter
- 11t: Tropfnase
- 12: photoaktive Zelle
- 12b: Beschichtung; Glasur
- 12p: photoaktive Schicht
- 13: elektrische Anschlussvorrichtung; erste elektrische Anschlussvorrichtung
- 13i: Isolierelement
- 13k: elektrisches Kontaktelement
- 14: elektrische Anschlussvorrichtung
- 14i: Isolierelement
- 14k: elektrisches Kontaktelement
- 21: Dachlatte
- 22: Stromschiene
- 22g: Grundkörper
- 22k: Kontaktelement

## Patentansprüche

1. Solardachziegel (1) mit einem keramischen Grundkörper (11), auf dessen Außenseite eine photoaktive Zelle (12) zur elektrischen Stromgewinnung angeordnet ist, mit einer Anschlussvorrichtung (13), die ein mit der photoaktiven Zelle (12) elektrisch leitend verbundenes Kontaktelement (13k) aufweist, welches mit einer Anschlussvorrichtung (14) eines zweiten Solardachziegels (1) und/oder mit einem elektrischen Leiter und/oder mit einer Stromschiene (22) verbindbar ist, indem das elektrische Kontaktelement (13) so ausgebildet ist, dass sich beim Auflegen des Solardachziegels auf eine Unterkonstruktion ein elektrisch leitender Abschnitt des elektrischen Kontaktelements (13) automatisch mit einer elektrisch leitenden Stromschiene (22) und/oder mit einem elektrisch leitenden Teil einer Anschlussvorrichtung (14) eines zweiten Solardachziegels und/oder mit einem an der Unterkonstruktion angeordneten elektrischen Leiter verbindet,
**dadurch gekennzeichnet,**
**dass** die Anschlussvorrichtung (14) einen elektrischen Leiter aufweist, der zumindest abschnittsweise zum Kontaktieren der photoaktiven Zelle (12) als eine optisch transparente und elektrisch leitfähige Beschichtung ausgebildet ist.

2. Solardachziegel nach Anspruch 1,
**dadurch gekennzeichnet,**
**dass** die optisch transparente und elektrisch leitfähige Beschichtung ein Metalloxid, insbesondere ein Zinnoxid enthält.

3. Solardachziegel nach Anspruch 1 oder 2,
**dadurch gekennzeichnet,**
**dass** die optisch transparente und elektrisch leitfähige Beschichtung im Bereich der photoaktiven Zelle (12) angeordnet ist und/oder die photoaktive Zelle (12) elektrisch kontaktiert.

4. Solardachziegel nach einem der Ansprüche 1 bis 3,
**dadurch gekennzeichnet,**
**dass** das elektrische Kontaktelement (13) an der Innenseite des keramischen Grundkörpers (11) angeordnet ist und vorzugsweise in dem keramischen Grundkörper (11) gehaltert ist.

5. Solardachziegel nach einem der vorhergehenden Ansprüche,
**dadurch gekennzeichnet,**
**dass** das elektrische Kontaktelement (13k, 14k) einen eine Kontaktfeder aufweisenden Stift aufweist, der beim Auflegen des Solardachziegels (1) auf eine Unterkonstruktion in die Stromschiene (22) oder eine Anschlussvorrichtung (14) eines zweiten Solarziegels (1) eingreift, wobei die Kontaktfeder Toleranzen ausgleicht.

6. Solardachziegel nach einem der Ansprüche 1 bis 4,
**dadurch gekennzeichnet,**
**dass** das elektrische Kontaktelement (13k, 14k) als Schneidklemmelement ausgebildet ist, welches zwei Schneidflanken zum Kontaktieren eines elektrischen Leiters aufweist.

7. Solardachziegel nach Anspruch 6,
**dadurch gekennzeichnet,**
**dass** das Schneidklemmelement eine Schneidgabel aufweist, wobei die zwei Schneidflanken einander gegenüberliegend angeordnet sind und einen Schneidklemmspalt begrenzen.

8. Solardachziegel nach Anspruch 6,
**dadurch gekennzeichnet,**
**dass** das Schneidklemmelement eine Schneidspitze aufweist, wobei die zwei Schneidflanken einander gegenüberliegend angeordnet sind und die Schneidspitze bilden, indem sie ausgehend von einer gemeinsamen Spitze zur Basis des Schneidklemmelementes hin mit größerem Abstand zueinander verlaufen.

9. Solardachziegel nach Anspruch 8,
**dadurch gekennzeichnet,**
**dass** die beiden Schneidflanken der Schneidspitze voneinander elektrisch isoliert sind.

10. Solardachziegel nach einem der Ansprüche 6 bis 9,
**dadurch gekennzeichnet,**
**dass** das Schneidklemmelement während des Kontaktierens eine Isolierung durchtrennt.

11. Solardachziegel nach einem der vorhergehenden Ansprüche,
**dadurch gekennzeichnet,**
**dass** die Anschlussvorrichtung (14) ein elektrisches Anschlusselement (14k) aufweist, welches an der Außenseite des keramischen Grundkörpers (11) angeordnet und mit dem elektrischen Kontaktelement (13) eines zweiten Solardachziegels (1) verbindbar ist.

12. Solardachziegel nach einem der vorhergehenden Ansprüche,
**dadurch gekennzeichnet,**
**dass** der keramische Grundkörper (1) an seiner Innenseite eine Nase zum Einhängen an einen Dachstuhl oder eine Dachlatte (21) aufweist und ein elektrisches Kontaktelement (13k) der Anschlussvorrichtung (13) im Bereich dieser Nase angeordnet ist.

13. Solardachziegel nach einem der vorhergehenden Ansprüche,
**dadurch gekennzeichnet,**
**dass** die photoaktive Zelle (12) auf die Außenseite des keramischen Grundkörper (11) aufgebracht oder mit der Außenseite des keramischen Grundkörper (11) flächig verbunden ist.

14. Solardachziegel nach einem der vorhergehenden Ansprüche,
**dadurch gekennzeichnet,**
**dass** die photoaktive Zelle (12) als Grätzelzelle oder als Farbstoffzelle ausgebildet ist und die optisch transparente und elektrisch leitfähige Beschichtung Wolfram-dotiertes Zinnoxid, vorzugsweise kristallines enthält.

15. Solardachziegel nach einem der vorhergehenden Ansprüche,
**dadurch gekennzeichnet,**
**dass** die Anschlussvorrichtung (13, 14) innerhalb des keramischen Grundkörpers (11) verlaufende elektrische Leiter (11l) umfasst, die eine elektrische Verbindung zwischen der optisch transparenten und elektrisch leitfähigen Beschichtung einerseits und dem elektrischen Kontaktelement (13k, 14k, 22k) andererseits herstellen.

16. Solardachziegel nach einem der vorhergehenden Ansprüche,
**dadurch gekennzeichnet,**
**dass** auf die Außenseite des keramischen Grundkörpers (11) eine Beschichtung oder Glasur aufgebracht ist, welche die photoaktive Zelle (12) komplett abdeckt.

17. Solardachziegel nach einem der vorhergehenden Ansprüche,
**dadurch gekennzeichnet,**
**dass** der keramische Grundkörper (11) im Bereich einer Anschlussvorrichtung (13) oder eines elektrischen Kontaktelements (14k) eine Tropfnase (11t) zum Abführen von Wasser aufweist.

18. Solardachziegel nach einem der vorhergehenden Ansprüche,
**dadurch gekennzeichnet,**
**dass** der Solardachziegel eine photokatalytisch aktive Oberflächenbeschichtung aufweist.

19. Solardachziegel nach Anspruch 18,
**dadurch gekennzeichnet,**
**dass** die photokatalytisch aktive Oberflächenbeschichtung Titanoxid, vorzugsweise Anatas, umfasst.

20. Dachkonstruktion mit einem Dachstuhl,
**dadurch gekennzeichnet,**
**dass** der Dachstuhl (2) als Unterkonstruktion ausgebildet ist und mehrere Solardachziegel (1) nach einem der vorhergehenden Ansprüche trägt.

21. Dachkonstruktion nach Anspruch 20,
wobei der Dachstuhl (2) mehrere Dachlatten (21) aufweist, die parallel und beabstandet zueinander verlaufen,
**dadurch gekennzeichnet,**
**dass** eine oder mehrere Dachlatten (21) als mit der Anschlussvorrichtung (13) verbindbare Stromschiene (22) ausgebildet sind oder eine mit der Anschlussvorrichtung (13) verbindbare Stromschiene (22) aufweisen.

22. Dachkonstruktion nach Anspruch 20 oder 21,
**dadurch gekennzeichnet,**
**dass** wenigstens zwei Solardachziegel (1) elektrisch parallelgeschaltet sind, wobei beide Pole eines Solardachziegels (1) über eine gemeinsame Stromschiene (22) mit zwei getrennten elektrischen Leitern geführt sind.

23. Dachkonstruktion nach Anspruch 20 oder 21,
**dadurch gekennzeichnet,**
**dass** wenigstens zwei einander zumindest teilweise überlappende Solardachziegel (1) elektrisch in Serie geschaltet sind, indem eine Anschlussvorrichtung (13) des ersten Solardachziegels (1) direkt mit einer Anschlussvorrichtung (14) des zweiten Solardachziegels (2) verbunden ist.

24. Dachkonstruktion nach einem der Ansprüche 20 bis 23,
**dadurch gekennzeichnet,**
**dass** eine Stromschiene (22) zumindest einen in flexibles Isoliermaterial eingebetteten elektrischen Leiter (22k) aufweist, so dass dieser in der Stromschiene (22) quer zu seiner Längserstreckung beweglich gelagert ist.

## Claims

1. Solar roof tile (1) having a ceramic base body (11), on the outside of which a photoactive cell (12) is arranged for electrical power generation, having a coupling device (13) which has a contact element (13k) electrically conductively connected to the photoactive cell (12), said contact element being able to be connected to a coupling device (14) of a second solar roof tile (1) and/or to an electrical conductor and/or to a busbar (22), by the electrical contact element (13) being formed in such a way that, when placing the solar roof tile on a substructure, an electrically conductive section of the electrical contact element (13) automatically connects to an electrically conductive busbar (22) and/or to an electrically conductive part of a coupling device (14) of a second solar roof tile and/or to an electrical conductor arranged on the substructure,
**characterised in that**
the coupling device (14) has an electrical conductor, which is designed, at least section by section, for contacting the photoactive cell (12) as an optically transparent and electrically conductive coating.

2. Solar roof tile according to claim 1,
**characterised in that**
the optically transparent and electrically conductive coating contains a metal oxide, in particular a tin oxide.

3. Solar roof tile according to claim 1 or 2,
**characterised in that**
the optically transparent and electrically conductive coating is arranged in the region of the photoactive cell (12) and/or electrically contacts the photoactive cell (12).

4. Solar roof tile according to one of claims 1 to 3,
**characterised in that**
the electrical contact element (13) is arranged on the inside of the ceramic base body (11) and is preferably held in the ceramic base body (11).

5. Solar roof tile according to one of the preceding claims,
**characterised in that**
the electrical contact element (13k, 14k) has a pin having a contact spring, said pin engaging with the busbar (22) or a coupling device (14) of a second solar roof tile (1) when the solar roof tile (1) is placed on a substructure, wherein the contact spring compensates for tolerances.

6. Solar roof tile according to one of claims 1 to 4,
**characterised in that**
the electrical contact element (13k, 14k) is formed as a cutting clamping element, which has two cutting flanks for contacting an electrical conductor.

7. Solar roof tile according to claim 6,
**characterised in that**
the cutting clamping element has a cutting prong, wherein the two cutting flanks are arranged opposite each other and delimit a cutting clamping gap.

8. Solar roof tile according to claim 6,
**characterised in that**
the cutting clamping element has a cutting point, wherein the two cutting flanks are arranged opposite each other and form the cutting point, by running outwards from a common point to the base of the cutting clamping element with a greater distance apart from each other.

9. Solar roof tile according to claim 8,
**characterised in that**
both cutting flanks of the cutting point are electrically insulated from each other.

10. Solar roof tile according to one of claims 6 to 9,
**characterised in that**
the cutting clamping element severs an insulation during the contacting.

11. Solar roof tile according to one of the preceding claims,
**characterised in that**
the coupling device (14) has an electrical coupling element (14k), which is arranged on the outside of the ceramic base body (11) and can be connected to the electrical contact element (13) of a second solar roof tile (1).

12. Solar roof tile according to one of the preceding claims,
**characterised in that**
the ceramic base body (1) has a lug on its inside to mount on a roof truss or a roof batten (21), and an electrical contact element (13k) of the coupling device (13) is arranged in the region of this lug.

13. Solar roof tile according to one of the preceding claims,
**characterised in that**
the photoactive cell (12) is attached to the outside of the ceramic base body (11) or is flatly connected to the outside of the ceramic base body (11).

14. Solar roof tile according to one of the preceding claims,
**characterised in that**
the photoactive cell (12) is designed as a Grätzel cell or a dye cell, and the optically transparent and electrically conductive coating contains tungsten-doped tin oxide, preferably crystalline.

15. Solar roof tile according to one of the preceding claims,
**characterised in that**
the coupling device (13, 14) comprises electrical conductors (111) running inside the ceramic base body (11), which establish an electrical connection between the optically transparent and electrically conductive coating on the one hand and the electrical contact element (13k, 14k, 22k) on the other hand.

16. Solar roof tile according to one of the preceding claims,
**characterised in that**
a coating or glaze is applied to the outside of the ceramic base body (11), said coating or glaze completely covering the photoactive cell (12).

17. Solar roof tile according to one of the preceding claims,
**characterised in that**
the ceramic base body (11) has a drip spout (11t) for removing water in the region of a coupling device (13) or an electrical contact element (14k).

18. Solar roof tile according to one of the preceding claims,
**characterised in that**
the solar roof tile has a photocatalytically active surface coating.

19. Solar roof tile according to claim 18,
**characterised in that**
the photocatalytically active surface coating comprises titanium oxide, preferably anatase.

20. Roof construction having a roof truss,
**characterised in that**
the roof truss (2) is formed as a substructure and supports several solar roof tiles (1) according to one of the preceding claims.

21. Roof construction according to claim 20,
wherein the roof truss (2) has several roof battens (21), which run in parallel to and spaced apart from one another,
**characterised in that**
one or more roof battens (21) are formed as a busbar (22) which is able to be connected to the coupling device (13) or have a busbar (22) which is able to be connected to the coupling device (13).

22. Roof construction according to claim 20 or 21,
**characterised in that**
at least two solar roof tiles (1) are electrically connected in parallel, wherein both poles of a solar roof tile (1) are guided by two separate electrical conductors via a common busbar (22).

23. Roof construction according to claim 20 or 21,
**characterised in that**
at least two at least partially overlapping solar roof tiles (1) are electrically connected in series, by a coupling device (13) of the first solar roof tile (1) being directly connected to a coupling device (14) of the second solar roof tile (2).

24. Roof construction according to one of claims 20 to 23,
**characterised in that**
a busbar (22) has at least one electrical conductor (22k) embedded in flexible insulation material, such that this is moveably mounted transversely to its longitudinal extension in the busbar (22).

## Revendications

1. Tuile solaire (1) avec un corps de base en céramique (11), sur le côté externe duquel est disposée une cellule photoactive (12) pour la production d'électricité, avec un dispositif de connexion (13) qui comprend un élément de contact (13k), relié de manière électroconductrice avec la cellule photoactive (12), qui peut être relié avec un dispositif de connexion (14) d'une deuxième tuile solaire (1) et/ou avec un conducteur électrique et/ou avec un rail conducteur (22), l'élément de contact électrique (13) étant conçu de façon à ce que, lors de la pose de la tuile solaire sur une infrastructure, une portion électroconductrice de l'élément de contact électrique (13) se relie automatique avec un rail conducteur (22) et/ou avec une partie électroconductrice d'un dispositif de connexion (14) d'une deuxième tuile solaire et/ou conducteur électrique disposé sur l'infrastructure,
**caractérisée en ce que**
le dispositif de connexion (14) comprend un conducteur électrique qui est conçu, au moins sur une partie destinée à la mise en contact de la cellule photoactive (12), comme un revêtement optiquement transparent et électroconducteur.

2. Tuile solaire selon la revendication 1,
**caractérisée en ce que**
le revêtement optiquement transparent et électroconducteur contient un oxyde métallique, plus particulièrement un oxyde d'étain.

3. Tuile solaire selon la revendication 1 ou 2,
**caractérisée en ce que**
le revêtement optiquement transparent et électroconducteur est disposé au niveau de la cellule photoactive (12) et/ou est en contact électrique avec la cellule photoactive (12).

4. Tuile solaire selon l'une des revendications 1 à 3,
**caractérisée en ce que**
l'élément de contact électrique (13) est disposé sur le côté interne du corps de base en céramique (11) et est de préférence maintenu dans le corps de base en céramique (11).

5. Tuile solaire selon l'une des revendications précédentes,
**caractérisée en ce que**
l'élément de contact électrique (13k, 14k) comprend une goupille comprenant un ressort de contact, qui, lors de la pose de la tuile solaire (1) sur une infrastructure, s'emboîte dans le rail conducteur (22) ou un dispositif de connexion (14) d'une deuxième tuile solaire (1), le ressort de contact compensant les tolérances.

6. Tuile solaire selon l'une des revendications 1 à 4,
**caractérisée en ce que**
l'élément de contact électrique (13k, 14k) est conçu comme un élément à bornes coupantes qui comprend deux flancs de coupe pour la mise en contact d'un conducteur électrique.

7. Tuile solaire selon la revendication 6,
**caractérisée en ce que**
l'élément à bornes coupantes comprend une fourche de coupe, les deux flancs de coupe étant disposés l'un en face de l'autre et délimitant un interstice de borne coupante.

8. Tuile solaire selon la revendication 6,
**caractérisée en ce que**
l'élément à bornes coupantes comprend une pointe de coupe, les deux flancs de coupe étant disposés l'un en face de l'autre et formant la pointe de coupe, grâce au fait qu'ils s'étendent à partir d'une pointe commune en direction de la base de l'élément à bornes coupantes avec une distance croissante entre eux.

9. Tuile solaire selon la revendication 8,
**caractérisée en ce que**
les deux flancs de coupe de la pointe de coupe sont isolés électriquement l'un de l'autre.

10. Tuile solaire selon l'une des revendications 6 à 9,
**caractérisée en ce que**
l'élément à bornes coupantes sectionne une isolation lors de la mise en contact.

11. Tuile solaire selon l'une des revendications précédentes,
**caractérisée en ce que**
le dispositif de connexion (14) comprend un élément de connexion électrique (14k) qui est disposé sur le côté externe du corps de base en céramique (11) et peut être relié avec l'élément de contact électrique (13) d'une deuxième tuile solaire (1).

12. Tuile solaire selon l'une des revendications précédentes,
**caractérisée en ce que**
le corps de base en céramique (1) comprend, sur son côté interne, un embout pour l'accrochage à une charpente ou à une latte de toit (21) et un élément de contact (13k) du dispositif de connexion (13) est disposé au niveau de cet embout.

13. Tuile solaire selon l'une des revendications précédentes,
**caractérisée en ce que**
la cellule photoactive (12) est posée sur le côté externe du corps de base en céramique (11) ou est relié sur toute sa surface avec le côté externe du corps de base en céramique (11).

14. Tuile solaire selon l'une des revendications précédentes,
**caractérisée en ce que**
la cellule photoactive (12) est conçue comme une cellule de Grätzel ou comme une cellule à colorant et le revêtement optiquement transparent et électroconducteur contient de l'oxyde d'étain, de préférence cristallin, dopé avec du tungstène.

15. Tuile solaire selon l'une des revendications précédentes,
**caractérisée en ce que**
le dispositif de connexion (13, 14) comprend des conducteurs électriques (11l) s'étendant à l'intérieur du corps de base en céramique (11), qui établissent une liaison électrique entre le revêtement optiquement transparent et électroconducteur d'une part et l'élément de contact électrique (13k, 14k, 22k) d'autre part.

16. Tuile solaire selon l'une des revendications précédentes,
**caractérisée en ce que**
sur le côté externe du corps de base en céramique (11), est appliqué un revêtement ou un vernis qui recouvre entièrement la cellule photoactive (12).

17. Tuile solaire selon l'une des revendications précédentes,
**caractérisée en ce que**
le corps de base en céramique (11) comprend, au niveau d'un dispositif de connexion (13) ou d'un élément de contact électrique (14k), un embout d'égouttement (11t) pour l'évacuation de l'eau.

18. Tuile solaire selon l'une des revendications précédentes,
**caractérisée en ce que**
la tuile solaire comprend un revêtement de surface photocatalytiquement actif.

19. Tuile solaire selon la revendication 18,
**caractérisée en ce que**
le revêtement de surface photocatalytiquement actif comprend de l'oxyde de titane, de préférence de l'anatase.

20. Structure de toit avec une charpente,
**caractérisée en ce que**
la charpente (2) est conçue comme une infrastructure et supporte plusieurs tuiles solaires (1) selon l'une des revendications précédentes.

21. Structure de toit selon la revendication 20,
la charpente (2) comprenant plusieurs lattes de toit (21) qui s'étendent parallèlement et avec une certaine distance entre elles,
**caractérisée en ce que**
une ou plusieurs lattes de toit (21) sont conçues comme un rail conducteur (22) pouvant être relié avec le dispositif de connexion (13) ou comprennent un rail conducteur (22) pouvant être relié avec le dispositif de connexion (13).

22. Structure de toit selon la revendication 20 ou 21,
**caractérisée en ce que**
au moins deux tuiles solaires (1) sont branchées électriquement en parallèle, les deux pôles d'une tuile solaire (1) étant guidés sur un rail conducteur (22) commun avec deux conducteurs électriques séparés.

23. Structure de toit selon la revendication 20 ou 21,
**caractérisée en ce que**
au moins deux tuiles solaires (1) se superposant au moins partiellement sont branchées électriquement en série, grâce au fait qu'un dispositif de connexion (13) de la première tuile solaire (1) est relié directement avec un dispositif de connexion (14) de la deuxième tuile solaire (2).

24. Structure de toit selon l'une des revendications 20 à 23,
**caractérisée en ce que**
un rail conducteur (22) comprend au moins un conducteur électrique (22k) intégré dans un matériau isolant flexible, de façon à ce qu'il soit logé de manière mobile transversalement par rapport à son extension longitudinale dans le rail conducteur (22).
